# DEMANDE DE BREVET EUROPEEN

(11) **EP 4 276 143 A1**
(43) Date de publication de la demande: **15.11.2023**
(21) Numéro de dépôt: 22172730.8
(22) Date de dépôt: 11.05.2022
(51) Int. Cl.: C08K 3/013, C08L 77/02, C08L 75/04, C08K 3/08, G04B 37/22

(54) **ARTICLE REALISE DANS UN MATERIAU PLASTIQUE LOURD**

(71) Demandeur: ETA SA Manufacture Horlogère Suisse, 2540 Grenchen (CH)
(72) Inventeur: DAHAN, Julien, 2900 Porrentruy (CH); SCHNELL, Benoît, 2540 Grenchen (CH)
(74) Mandataire: ICB SA

(57) **Abrégé**

L'invention concerne un article réalisé dans un matériau comprenant en poids : une charge métallique et/ou céramique présente dans un pourcentage supérieur ou égal à 50% et inférieur ou égal à 85%, au moins un polymère présent dans un pourcentage supérieur ou égal à 15% et inférieur ou égal à 50%, optionnellement au moins un agent de couplage présent dans un pourcentage supérieur ou égal à 0% et inférieur à 10%, caractérisé en ce que ledit polymère étant lié à la charge et/ou, lorsque le matériau comporte au moins un agent de couplage, l'agent de couplage étant respectivement lié au polymère et à la charge par une ou plusieurs liaisons hydrogènes, en ce que le polymère, et/ou l'agent de couplage, comporte un donneur de liaison hydrogène qui est un groupement NHₓ adjacent à un accepteur de liaison hydrogène qui est un groupement C=O ; de manière à former un motif - [(C=O)NH]- ; et en ce que le motif -[(C=O)NH]- représente au moins 1% molaire du polymère, et/ou de l'agent de couplage.

La présente invention se rapporte également au procédé de fabrication par moulage par injection ou par impression 3D de cet article.

## Description

### Domaine technique de l'invention

La présente invention se rapporte à un article, et par exemple à un composant horloger, réalisé dans un matériau plastique lourd et résistant aux chocs.

La présente invention concerne également un procédé de fabrication d'un tel article réalisé dans un plastique lourd.

### Arrière-plan technologique

De nombreux composants d'habillage, tels que les carrures et les bracelets, sont réalisés dans des matériaux plastiques. Ces composants peuvent être réalisés par des procédés de moulage, ce qui présente l'avantage de pouvoir obtenir des formes diverses sans aucune opération de reprise. Ces composants en matériau plastique ont pour caractéristique d'avoir une densité voisine de 1 et donc d'être légers. Cela peut constituer un désavantage pour l'utilisateur souhaitant porter au poignet une montre présentant un certain poids.

Pour remédier à cet inconvénient, il a été proposé, par exemple dans le document EP 2 482 142, de réaliser des composants horlogers, que ce soit du mouvement ou d'habillage, dans des matériaux plastiques chargés avec une poudre métallique haute densité telle qu'une poudre de tungstène. Ces composants sont réalisés par un procédé de moulage par injection ce qui permet de garder l'avantage de la mise en forme dans le moule sans reprise ultérieure tout en augmentant la densité.

Ces matériaux cumulent ainsi certains avantages des plastiques tels que la facilité de mise en forme par injection avec ceux des métaux tels que la densité, le toucher froid et l'aspect métallique.

On peut cependant observer dans ces matériaux une diminution de la résistance à la rupture et de l'allongement par rapport à la matrice polymérique d'accueil. Cette diminution est attribuée à un manque de cohésion de la matière dû à l'incorporation de la poudre métallique de taille micrométrique dans des chaines de polymères de taille nanométrique. On observe ainsi pour un matériau comprenant une charge métallique (ou céramique), une polyoléfine (polyéthylène, polypropylène) comme polymère et du polyuréthane comme agent de couplage, cette chute des propriétés due au manque de cohésion du matériau.

Cette diminution des propriétés mécaniques va impacter la capacité d'absorption des chocs du matériau. Ce type de matériau n'est donc pas adapté pour des applications nécessitant une résistance aux chocs, comme par exemple dans le domaine horloger pour la réalisation de carrures, etc.

### Résumé de l'invention

La présente invention a pour objet de proposer une nouvelle composition de matière plastique lourde permettant d'améliorer la cohésion de la matière et par là-même les propriétés mécaniques du matériau.

L'invention trouve une application particulièrement intéressante dans le domaine de l'horlogerie ; toutefois l'invention n'est pas limitée à une telle application.

À cette fin, la présente invention propose un article réalisé dans un matériau comprenant en poids pour un total de 100% :
- une charge dans une matière métallique et/ou céramique ayant une masse volumique supérieure ou égale à 3 g/cm³, ladite charge étant présente dans un pourcentage supérieur ou égal à 50% et inférieur ou égal à 85%,
- au moins un polymère présent dans un pourcentage supérieur ou égal à 15% et inférieur ou égal à 50%,
- optionnellement au moins un agent de couplage présent dans un pourcentage supérieur ou égal à 0% et inférieur à 10%,
- optionnellement au moins un renfort présent dans un pourcentage compris entre 0 et 10%,
- optionnellement au moins un pigment présent dans un pourcentage compris entre 0 et 5%,
- optionnellement au moins un diluant et/ou un plastifiant présent dans un pourcentage compris entre 0 et 5%.

Selon l'invention, le polymère est lié à la charge, et/ou l'agent de couplage est lié respectivement à la charge et au polymère, lorsque le matériau comporte au moins un agent de couplage, par une ou plusieurs liaisons hydrogènes.

Le polymère, et/ou l'agent de couplage, comporte un donneur de liaison hydrogène qui est un groupement NHₓ adjacent à un accepteur de liaison hydrogène qui est un groupement C=O ; de manière à former un motif -[(C=O)NH]-.

Le motif -[(C=O)NH]- représente au moins 1% molaire du polymère, et/ou de l'agent de couplage.

Ces liaisons hydrogènes liant la charge, le polymère et le cas échéant l'agent de couplage permettent d'assurer une bonne cohésion du matériau. Elles ont pour caractéristique d'avoir une énergie d'interaction qui est typiquement inférieure à 100 kJ/mol, voire à 50 kJ/mol, ce qui permet de casser les liaisons entre molécules lors de la montée en température pendant le procédé de fabrication et par là-même d'assurer un meilleur mélange et une meilleure cohésion de la matière après refroidissement et reformation des liaisons.

Le matériau selon l'invention a une rigidité suffisante avec un module de Young supérieur ou égal à 2,5 GPa, un allongement à la rupture suffisant qui est supérieur ou égal à 5% et une charge à la rupture suffisante qui est supérieure ou égale à 30 MPa, pour une application horlogère. Il présente en outre une bonne ténacité et a une masse volumique comprise entre 2 et 7 g/cm³.

Outre les caractéristiques évoquées dans le paragraphe précédent, l'article selon l'invention peut présenter une ou plusieurs caractéristiques complémentaires parmi les suivantes, considérées individuellement ou selon toutes les combinaisons techniquement possibles :
- la charge est présente dans un pourcentage en poids compris entre 60 et 80% et en ce que le polymère est présent dans un pourcentage compris entre 20 et 40% ;
- la charge est présente dans un pourcentage en poids compris entre 65 et 75% et en ce que le polymère est présent dans un pourcentage compris entre 25 et 35% ;
- la charge est présente dans un pourcentage en poids compris entre 50 et 75% et en ce que le polymère est présent dans un pourcentage compris entre 25 et 50% ;
- la charge est présente dans un pourcentage en poids compris entre 50 et 65% et en ce que le polymère est présent dans un pourcentage compris entre 35 et 50% ;
- l'agent de couplage est présent dans un pourcentage en poids compris entre 0,1 et 10% ;
- l'agent de couplage est présent dans un pourcentage en poids compris entre 0,1 et 5% ;
- l'agent de couplage est présent dans un pourcentage en poids compris entre 0,5 et 3% ;
- la matière métallique et/ou céramique comprend en surface des oxydes, des hydroxydes et/ou des lacunes électroniques impliqués dans des liaisons hydrogènes, de coordination et ionique avec le polymère et/ou l'agent de couplage ;
- le polymère et/ou l'agent de couplage sont porteurs d'un ou plusieurs des groupements choisis parmi NHₓ, OH, COC, C=O et COOH ;
- le polymère est un polyamide, préférentiellement un polyamide 11 ;
- l'agent de couplage est un polyuréthane ;
- le polymère est lié à la charge et/ou, lorsque le matériau comporte au moins un agent de couplage, l'agent de couplage étant respectivement lié au polymère et à la charge par une ou plusieurs liaisons ioniques, le polymère portant un groupement NHₓ+ lié à un anion de la charge et/ou de l'agent de couplage ;
- la charge porte un anion O- ;
- l'agent de couplage porte un anion R-COO- ;
- le polymère est lié à la charge et/ou, lorsque le matériau comporte au moins un agent de couplage, l'agent de couplage étant respectivement lié au polymère et à la charge par une ou plusieurs liaisons de coordination, avec le polymère et/ou l'agent de couplage portant des fonctions amine ou acide carboxylique formant ladite liaison de coordination avec une lacune électronique en surface de la charge ;
- l'agent de couplage comporte au minimum 20 atomes de carbone ;
- le matériau comporte la charge et le polymère qui est un polyuréthane, sans addition dudit agent de couplage ;
- le matériau comporte la charge avec comme polymère du polyamide et comme agent de couplage du polyuréthane ;
- le matériau comporte, pour un pourcentage de 100%, ladite charge dans un pourcentage compris entre 65 et 80%, ledit polymère dans un pourcentage compris entre 19,5 et 34,5%, et ledit agent de couplage dans un pourcentage compris entre 0,5 et 5% ;
- le matériau comporte, pour un pourcentage de 100%, ladite charge dans un pourcentage compris entre 65 et 75%, ledit polymère dans un pourcentage compris entre 24 et 34%, et ledit agent de couplage dans un pourcentage compris entre 1 et 3,5% ;
- le matériau comporte, pour un pourcentage de 100%, ladite charge dans un pourcentage compris entre 50 et 75%, ledit polymère dans un pourcentage compris entre 24,5 et 49,5%, et ledit agent de couplage dans un pourcentage compris entre 0,5 et 5% ;
- le matériau comporte, pour un pourcentage de 100%, ladite charge dans un pourcentage compris entre 50 et 65%, le polymère dans un pourcentage compris entre 34,5 et 49,5%, et ledit agent de couplage dans un pourcentage compris entre 0,5 et 5% ;
- le matériau comporte la charge avec comme polymère du polyamide et comme agent de couplage un hydroxysilane avec une fonction amide ou aminé ;
- le matériau comporte la charge avec comme polymère du polyesther et comme agent de couplage un hydroxysilane avec une fonction amide ou aminé ;
- le renfort est présent dans un pourcentage en poids compris entre 1 et 6% ;
- le renfort est formé de fibres de verre, de billes de verre, de fibres de carbone et/ou de fibres d'aramide ;
- l'article est un composant d'habillage ou du mouvement en horlogerie.

En outre, la présente invention se rapporte à un procédé de fabrication de ce matériau par moulage, par injection ou par impression 3D.

Le procédé présente pour caractéristique que la matière de base pour la charge est sous forme d'une poudre ayant un BET supérieur ou égal à 0.01 m²/g, de préférence à 2 m²/g, plus préférentiellement à 5 m²/g, de manière à obtenir une charge avec une surface suffisamment réactive pour former les liaisons hydrogènes, et optionnellement des liaisons ioniques et/ou de coordination complémentaires, avec le polymère et/ou l'agent de couplage si ce dernier est présent. La surface réactive quel que soit le type de céramique (oxydes, nitrures ou carbures) ou de métal (acier, tungstène, etc.) comporte ainsi des hydroxydes, des oxydes et/ou des lacunes électroniques.

D'autres caractéristiques et avantages de la présente invention apparaîtront dans la description suivante d'un mode de réalisation préféré, présenté à titre d'exemple non limitatif en référence aux dessins annexés.

### Brève description des figures

La figure 1 représente une pièce d'horlogerie comprenant une carrure réalisée avec le matériau en plastique lourd selon l'invention.
La figure 2 schématise les interactions entre la surface de la charge, l'agent de couplage et le polymère.
La figure 3 illustre schématiquement les liaisons hydrogènes qui s'établissent entre la charge, l'agent de couplage et le polymère.

### Description détaillée de l'invention

La présente invention se rapporte à un article réalisé dans un matériau composite comprenant une matière plastique et une matière métallique ou céramique.

À titre d'exemple, l'article peut être un élément constitutif de montres, bijoux, bracelets, etc.

L'article peut également être un élément constitutif d'une lunette, par exemple une monture, une branche, un patin.

De manière non limitative et non exhaustive, l'article selon l'invention peut également être un élément constitutif, ou former l'intégralité, d'un article de sport, d'un article de cuisine, d'un article ou d'un instrument de musique, d'un article de maroquinerie ou de mercerie, d'un composant automobile ou aéronautique, d'un composant pour article électronique (par exemple coque de protection de téléphone, clavier d'ordinateur, touches de clavier d'ordinateur, casque audio, ...), un article d'écriture, etc.

Avantageusement, l'article est un composant ou une partie d'un composant dont la fonctionnalité nécessite une certaine résistance aux impacts et aux chocs.

Dans le domaine particulier de l'horlogerie, cet article peut être par exemple un composant d'habillage tel qu'une carrure, un fond, une lunette, un poussoir, un maillon de bracelet, un cadran, une aiguille, un index de cadran, etc.

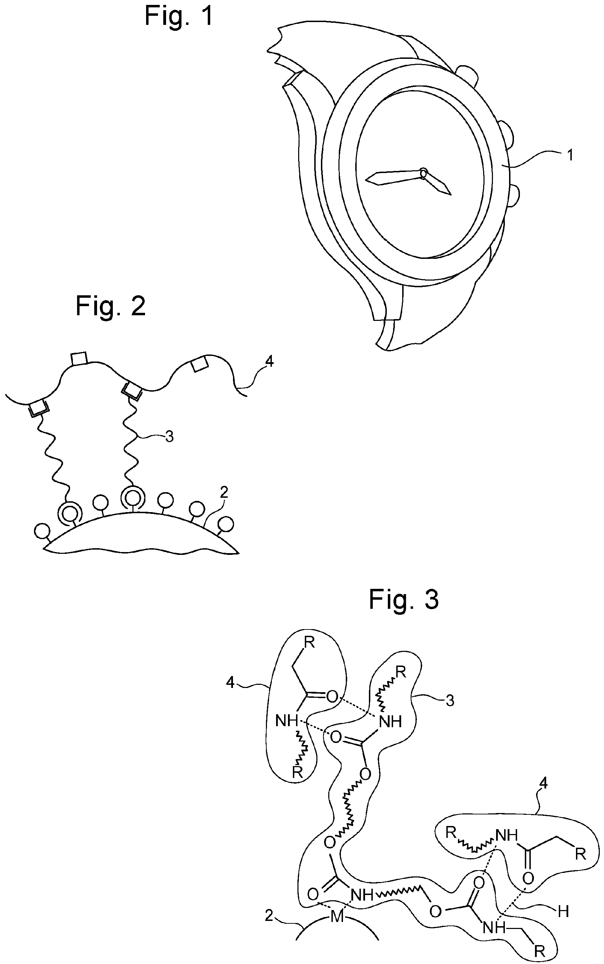

À titre illustratif, une carrure 1 réalisée avec le matériau selon l'invention est représentée à la figure 1.

Selon un autre exemple de réalisation (non représenté), l'article selon l'invention peut être un composant du mouvement, tel que par exemple une platine.

Selon l'invention, l'article est réalisé dans un matériau comportant deux composants principaux qui sont une charge, métallique et/ou céramique, et un polymère. Ainsi, le matériau peut être qualifié de matériau composite.

Optionnellement, le matériau peut comporter un ou plusieurs agents de couplage si l'interaction physico-chimique entre la charge et le polymère n'est pas suffisante en fonction du type d'application, et si l'on souhaite augmenter encore davantage la résistance aux chocs déjà améliorée du matériau selon l'invention.

Optionnellement, le matériau peut également comporter un renfort.

Optionnellement, le matériau peut également comporter un ou plusieurs pigments.

Optionnellement, le matériau peut également comporter des diluants et/ou des plastifiants.

La charge peut être métallique et/ou céramique.

Pour la matière métallique, il peut s'agir d'un acier conventionnel au carbone, d'un acier inoxydable, de cuivre, d'un alliage de cuivre, de titane, d'un alliage de titane ou encore de tungstène. Préférentiellement, il s'agit d'un acier inoxydable sans nickel.

Pour la matière céramique, il peut s'agir de carbures, de nitrures ou d'oxydes tels que du ZrO₂, CeO₂, ZnO, etc.

Il peut également s'agir d'une charge comportant un mélange de matières métallique et céramique.

La charge est présente dans un pourcentage supérieur ou égal à 50% et inférieur ou égal à 85% en poids du matériau.

Par exemple, la charge est comprise entre 50 et 75% en poids (bornes incluses) du matériau.

Par exemple, la charge est comprise entre 50 et 65% en poids (bornes incluses) du matériau, si l'on souhaite une densité du matériau relativement basse.

Par exemple, la charge est comprise entre 60 et 80% en poids (bornes incluses) du matériau, si l'on souhaite augmenter davantage la densité du matériau, par exemple entre 65 et 75% en poids.

Avantageusement, dans les exemples décrits précédemment, la charge dans son ensemble est majoritaire en masse, c'est-à-dire supérieur à 50% en poids du matériau.

Selon l'invention, la charge est introduite lors du procédé de fabrication sous forme d'une poudre avec une surface spécifique élevée (≥ 0.01 m²/g) qui de facto, en l'absence de traitement spécifique, présentera sur sa surface des modifications de sa composition et/ou des défauts, et ce, quel que soit le type de charge métallique ou céramique. Il peut s'agir d'oxydes et d'hydroxydes présents sur la surface oxydée de la poudre et de défauts tels que des lacunes électroniques, qui permettront d'interagir via différentes liaisons hydrogènes avec le polymère et/ou l'agent de couplage si ce dernier est présent. La figure 2 schématise ainsi les interactions qui s'établissent entre la surface de la charge 2, l'agent de couplage 3 et le polymère 4, lorsque le matériau comporte un agent de couplage.

Le matériau comporte un ou plusieurs polymères capables de générer des liaisons hydrogènes, et éventuellement en complément des liaisons ioniques et/ou de coordination, avec la charge et/ou l'agent de couplage lorsqu'il est présent. Toutes ces liaisons physico-chimiques, et notamment les liaisons hydrogènes, présentent pour caractéristique d'avoir une faible énergie d'interaction, typiquement comprise entre 5 et 100 kJ/mole, ce qui permet de rompre les liaisons entre molécules lors de la montée en température au cours de l'injection ou de l'impression 3D des matières, ces liaisons physico-chimiques étant rétablies lors du refroidissement de la matière après l'injection ou l'impression 3D. Cette caractéristique permet un meilleur mélange, une meilleure compatibilité entre les composants et dès lors une meilleure cohésion du matériau à l'échelle moléculaire et donc une meilleure cohésion globale du matériau.

Le polymère ou l'ensemble des polymères représente un pourcentage en poids compris entre 15 et 50% du matériau (bornes incluses).

Par exemple, le polymère ou l'ensemble des polymères représente un pourcentage en poids compris entre 25 et 50% du matériau (bornes incluses).

Par exemple, le polymère ou l'ensemble des polymères représente un pourcentage en poids compris entre 35 et 50% du matériau (bornes incluses).

Par exemple, le polymère ou l'ensemble des polymères représente un pourcentage en poids compris entre 20 et 40% du matériau (bornes incluses), par exemple entre 25 et 35% en poids du matériau.

Lorsque la charge est majoritaire dans le matériau, le polymère ou l'ensemble des polymères représente un pourcentage inférieur à 50% en poids.

Avantageusement, le polymère, ou l'ensemble des polymères, est choisi pour former des liaisons hydrogènes avec la charge. A cet effet, le polymère, ou l'ensemble des polymères, comporte un donneur de liaison hydrogène comprenant un groupement avec un atome d'hydrogène, tel qu'un groupement NH ou OH, et un accepteur de liaison hydrogène comprenant un groupement avec un atome plus électronégatif que l'hydrogène, tel que l'azote, l'oxygène ou un atome du groupe des halogènes tel que le fluor, le chlore, le brome, etc. La liaison hydrogène s'établit avec les hydroxydes et oxydes présents sur la surface oxydée de la charge métallique ou céramique.

À titre d'exemple, le groupement hydroxyde en surface de la charge interagit avec un groupement C=O, R-OH, COC, R-NHₓR' du polymère.

De préférence, les donneur et accepteur de liaisons hydrogène sont adjacents sur la chaîne du polymère.

De préférence, le polymère, ou l'ensemble des polymères, comporte un donneur de liaison hydrogène qui est un groupement NHₓ adjacent à un accepteur de liaison hydrogène qui est un groupement C=O, de manière à former un motif -[(C=O)-NH]-.

De préférence, le polymère, ou l'ensemble des polymères, peut être un polyamide de chaîne R-C(=O)-NH-R', et donc comportant le motif - [(C=O)-NH]-, avec donc le groupement C=O comprenant l'atome d'oxygène accepteur de liaison et le groupement N-H comprenant l'atome d'hydrogène donneur de liaison qui sont adjacents.

De préférence, le motif -[C(=O)-NH]- représente au moins 1% de la chaine du polymère, ou de l'ensemble des polymères.

De préférence, le polymère est un polyamide biosourcé d'origine renouvelable, par exemple un polyamide 11.

En compléments, des liaisons ioniques et/ou de coordinations peuvent s'établir entre le polymère et la charge pour créer des interactions supplémentaires et encore améliorer la cohésion de la matière, c'est-à-dire entre la charge et le polymère.

Les liaisons ioniques dans le cadre de l'invention résultent de l'interaction entre une fonction basique chargée négativement et une fonction acide chargée positivement. La liaison s'établit avec transfert d'un ion H⁺ depuis un groupement OH en surface de la charge métallique ou céramique vers le polymère. À titre d'exemple, le polymère peut comporter un groupement NHₓ et plus spécifiquement être une polyamine, avec obtention R-NHₓ₊₁-R'+/MO- après la réaction acido-basique.

Les liaisons de coordination sont un type particulier de liaison covalente où le doublet d'électrons communs ne provient que de l'un des atomes liés par opposition à la liaison covalente conventionnelle où un électron provient de chacun des atomes liés. Selon l'invention, cette liaison implique plus spécifiquement une base de Lewis formée par le polymère, associée à une lacune électronique en surface de la charge formant l'acide de Lewis. Tout polymère porteur d'une fonction comportant un atome porteur de doublets non liants peut partager ce doublet pour « stabiliser » la lacune électronique. Il peut par exemple s'agir du doublet non liant de l'azote ou de l'oxygène dans R(C=O)NR', dans RO(C=O)NR' et dans R(C=O)OR'. Le polymère peut également porter des fonctions amine (NHx) ou acide carboxylique (COOH) aptes à former cette liaison avec une lacune électronique en surface de la charge. On peut par exemple citer les polyuréthanes et les polyesters.

Le matériau peut comporter un agent de couplage dans un pourcentage compris entre 0% et inférieur à 10%, avantageusement entre 0,1 et 10%, plus avantageusement entre 0,1 et 5%, encore plus avantageusement entre 0,5 et 3%.

L'utilisation d'un agent de couplage permet d'améliorer davantage les caractéristiques mécaniques de l'article réalisé dans un tel matériau selon l'invention, et notamment la résistance aux chocs.

L'agent de couplage est apte à être lié à la charge et au polymère par une ou plusieurs liaisons hydrogènes principalement. Les liaisons hydrogènes entre la charge et l'agent de couplage ainsi qu'entre le polymère et l'agent de couplage, peuvent remplacer ou compléter les liaisons hydrogènes entre le polymère et la charge, en fonction de la nature du polymère utilisé.

Des liaisons ioniques et/ou de coordination telles que décrites ciavant peuvent également créer des interactions supplémentaires et encore améliorer la cohésion de la matière, c'est-à-dire entre l'agent de couplage et la charge et entre l'agent de couplage et le polymère.

On précisera qu'en présence d'un agent de couplage, la liaison hydrogène s'établit principalement entre l'agent de couplage et la charge et entre l'agent de couplage et le polymère sans nécessairement de liaisons hydrogènes directes entre la charge et le polymère. Comme pour le polymère, l'agent de couplage peut comporter au moins un groupement choisi parmi C=O, COC, OH, NHₓ ou encore COOH.

De préférence, les donneur et accepteur de liaisons hydrogène sont adjacents sur la chaîne de l'agent de couplage.

De préférence, l'agent de couplage comporte un donneur de liaison hydrogène qui est un groupement NHₓ adjacent à un accepteur de liaison hydrogène qui est un groupement C=O, de manière à former un motif -[(C=O)-NH]-.

De préférence, le motif -[C(=O)-NH]- représente au moins 1% de la chaine de l'agent de couplage.

De préférence, l'agent de couplage est un polyuréthanne comportant le motif -[O-C=O-NH]-.

Préférentiellement, l'agent de couplage a une chaîne longue avec minimum 20 atomes de carbone.

Toujours à titre d'exemple l'agent de couplage peut être un hydroxysilane avec une fonction amide ou amine et avantageusement minimum 20 atomes de carbone sur la chaîne, pour permettre des liaisons hydrogènes, ioniques et/ou de coordination.

Toujours à titre d'exemple, l'agent de couplage peut également réaliser des liaisons ioniques avec une réaction acido-basique se déroulant lors du procédé de fabrication entre la charge et l'agent de couplage avec transfert d'un ion H⁺ depuis un groupement OH en surface de la charge.

L'agent de couplage peut également réaliser des liaisons ioniques entre l'agent de couplage et le polymère comprenant l'un ou l'autre respectivement des fonctions acide carboxylique R-COOH et amine R'-NHₓ formant la base avec obtention de RCOO-/R'-NHₓ₊₁+ après la réaction acido-basique.

De manière alternative, le polymère et l'agent de couplage peuvent être déjà chargés avant d'être mis en présence. Auquel cas, pour l'exemple ci-dessus, l'agent de couplage et le polymère sont respectivement porteurs soit de la fonction basique RCOO-, soit de la fonction acide R'-NHₓ₊₁+.

Optionnellement, le matériau peut également comporter un renfort dans un pourcentage en poids compris entre 0 et 10%, préférentiellement entre 0% exclu et inférieur ou égal à 10%, avantageusement entre 1 et 6% (bornes comprises). Le renfort peut être présent sous différentes formes, par exemple, sous forme de fibres ou de particules. Par exemple, il peut s'agir de fibres de verre, de billes de verre, de fibres de carbone et/ou de fibres d'aramide avec une longueur de fibres inférieure ou égale à 300 µm, et, de préférence, à 200 µm. Le renfort a pour objet d'améliorer la ténacité du matériau, de limiter le retrait de la matière lors de l'injection et/ou d'améliorer la conductivité électrique du matériau.

Optionnellement, le matériau peut également comporter un ou plusieurs pigments dans un pourcentage total compris entre 0 et 5% en poids, préférentiellement entre 0% exclu et inférieur ou égal à 5%. Le pigment peut être un pigment organique ou minéral. Par exemple, il peut s'agir du noir de carbone pour le noir, du dicétopyrrolopyrrole pour le rouge (par ex. Irgazin Red K3840LW de BASF), du phthalocyanine de cuivre pour le bleu (par ex. Heliogen Blue K7096 de BASF), d'un pigment monoazo pour le jaune (par ex. Paliotol Yellow K1760 de BASF), etc.

Optionnellement, le matériau peut également comporter des diluants et/ou des plastifiants tels que des cires (paraffines) ou autres résines de mise en œuvre (terpéniques, phénoliques, etc.) pour faciliter la mise en œuvre lors de la fabrication, l'ensemble de ces diluants et plastifiants étant compris entre 0 et 5% en poids, préférentiellement entre 0% exclu et inférieur ou égal à 5%.

À titre d'exemple et comme représenté à la figure 3, le matériau comporte la charge métallique M et/ou la charge céramique 2 avec comme polymère 4 du polyamide et comme agent de couplage 3 du polyuréthane avec préférentiellement minimum 20 atomes de carbone. Préférentiellement, le polymère 4 est un polyamide 11.

Le polyamide P11 est d'origine renouvelable car il est dérivé de l'huile de ricin. Ainsi, le matériau proposé par l'invention est un matériau biosourcé.

Dans cet exemple, les liaisons hydrogènes entre le polymère, l'agent de couplage et la charge sont symbolisées par des traits pointillés.

A titre d'exemple, le matériau comporte, pour un pourcentage en poids de 100%, :
- la charge métallique, telle qu'un acier inoxydable, et/ou céramique telle qu'un oxyde de zirconium dans un pourcentage compris entre 65 et 80% en poids, par exemple entre 65 et 75%, ou encore entre 50 et 75% en poids, par exemple entre 50 et 65%,
- le polyamide dans un pourcentage compris entre 19.5 et 34.5% en poids, par exemple entre 24 et 34%, ou encore entre 24,5 et 49,5%, par exemple entre 34,5 et 49, 5%, et
- le polyuréthane dans un pourcentage compris entre 0.5 et 5%, par exemple entre 1 et 3.5%.

A titre d'exemple, le matériau comporte, pour un pourcentage en poids de 100%, :
- une charge céramique telle qu'un oxyde de zirconium dans un pourcentage compris entre 65 et 80% en poids, par exemple entre 65 et 75%, ou encore entre 50 et 75% en poids, par exemple entre 50 et 65%,
- un polyamide, tel qu'un polyamide 11, dans un pourcentage compris entre 19.5 et 34.5% en poids, par exemple entre 24 et 34%, ou encore entre 24,5 et 49,5%, par exemple entre 34,5 et 49, 5%, et
- un polyuréthane dans un pourcentage compris entre 0,5 et 5%, par exemple entre 1 et 3.5%.

Un tel matériau combinant un matériau céramique et un matériau biosourcé d'origine renouvelable est appelé matériau biocéramique (ou bioceramic en langue anglaise).

À titre d'exemple, le matériau comporte une charge métallique et/ou céramique et du polyuréthane avec le polyuréthane agissant à la fois comme polymère et comme agent de couplage. Dans cet exemple, aucun agent de couplage distinct du polymère n'est donc requis car l'interaction entre la charge et le polymère est suffisante pour assurer une bonne cohésion du matériau à l'issue du procédé.

À titre d'exemple, le matériau comporte une charge métallique et/ou céramique avec comme polymère du polyamide et comme agent de couplage un hydroxysilane avec une fonction amide ou amine, l'agent de couplage comportant avantageusement minimum 20 atomes de carbone.

À titre d'exemple, le matériau comporte une charge métallique et/ou céramique avec comme polymère du polyester et comme agent de couplage un hydroxysilane avec une fonction amide ou amine, l'agent de couplage comportant préférentiellement minimum 20 atomes de carbone.

L'article est fabriqué par moulage, par injection ou par impression 3D. Le procédé se caractérise par le BET de la poudre de la charge qui doit être suffisant pour obtenir une surface réactive. Plus précisément, la matière de base pour la charge est une poudre ayant une surface spécifique BET supérieure ou égale à 0.01 m²/g, de préférence à 2 m²/g, plus préférentiellement à 5 m²/g mesurée selon la norme ISO 9277 de 2010.

Pour un moulage par injection, le procédé de fabrication comporte les étapes suivantes faisant référence aux charges, polymères, agents de couplages, renfort et pigments décrits précédemment :
a) Préparer des granulés de quelques millimètres comprenant en poids :
   - la charge métallique et/ou céramique ayant une masse volumique supérieure ou égale à 3 g/cm³, la charge étant présente dans un pourcentage supérieur ou égale à 50% et inférieur ou égal à 85%, par exemple entre 60 et 80%, par exemple entre 65 et 75%, par exemple entre 50 et 75%, par exemple entre 50 et 65%,
   - le ou les polymères présent dans leur ensemble dans un pourcentage supérieur ou égal à 15% et inférieur ou égal à 50%, par exemple entre 20 et 40%, par exemple entre 25 et 35%, par exemple entre 25 et 50%, par exemple entre 35 et 50%,
   - optionnellement au moins un agent de couplage présent dans un pourcentage supérieur ou égal à 0% et inférieur à 10%, avantageusement entre 0,1 et 10%, plus avantageusement entre 0,1 et 5%, encore plus avantageusement entre 0,5 et 3%,
   - optionnellement un renfort présent dans un pourcentage compris entre 0 et 10%,
   - optionnellement le ou les pigments présents dans un pourcentage compris entre 0 et 5%,
   - optionnellement le diluant et/ou le plastifiant ou un mélange de diluants et/ou de plastifiants, ledit diluant et/ou ledit plastifiant ou ledit mélange de diluants et/ou de plastifiants étant présent dans un pourcentage compris entre 0 et 5%.
b) Mouler par injection lesdits granulés pour former l'article ou une partie de l'article, par exemple par surmoulage d'une autre partie. L'injection est réalisée dans un moule qui a une température comprise entre 60 et 100°C, de préférence entre 70 et 80°C, tandis que la matière lors de l'injection a une température comprise entre 200 et 300°C, et, de préférence, entre 250 et 300°C.

À l'étape a), les granulés peuvent être fabriqués par découpe d'un boudin issu de l'extrusion des matières premières susmentionnées. Avantageusement, l'agent de couplage, s'il est présent, est introduit dans un premier temps dans une trémie de l'extrudeuse soit séparément, soit avec les granulés du polymère avant d'introduire la poudre métallique ou céramique dans un second temps dans l'extrudeuse. Lorsque l'agent de couplage est introduit séparément, il peut être introduit sous forme de poudre avec un d90 inférieur ou égal à 500 µm et, de préférence, à 315 µm ou sous forme liquide. Le pigment peut être introduit lors de l'extrusion et avantageusement dans un second temps. Il est également envisageable de le mélanger aux granulés du polymère juste avant l'extrusion.

Selon une variante, la matière métallique, ou céramique, et l'agent de couplage, s'il est présent, sont introduits dans un premier temps dans une trémie de l'extrudeuse de manière à enrober la poudre métallique, ou céramique, avec l'agent de couplage avant d'introduire le polymère et le renfort.

De manière alternative, l'article peut être fabriqué par impression 3D telle que par FDM (Fusion Déposition Molding).

L'article ainsi obtenu comporte la matière métallique, et/ou céramique, et la matière plastique comprenant le polymère, et éventuellement l'agent de couplage, avec des produits issus de la réaction entre la charge, le polymère et l'agent de couplage lors de l'extrusion ou de l'injection. Il comporte également le renfort et le pigment, si pigment et renfort il y a.

L'article selon l'invention présente un module de Young supérieur ou égal à 2,5 GPa, un allongement à la rupture supérieur ou égal à 5% et une charge à la rupture supérieure ou égale à 30 MPa, ces propriétés étant mesurées selon la norme ISO 527-1A de 2019.

À titre d'exemple, des essais ont été réalisés pour fabriquer par injection des carrures partant de granulés cylindriques ayant un diamètre et une longueur respectivement de l'ordre de 4 mm et 1.5 mm.

Les tableaux 1 et 2 ci-après reprennent deux exemples de réalisation avec les propriétés résultantes avant et après vieillissement pendant 24h dans une étuve ventilée sans contrôle d'humidité à 60°C. Des essais de résilience par mouton pendule sur les carrures ont par ailleurs démontré la bonne ténacité des carrures réalisées avec les compositions susmentionnées.

La tableau 3 illustre un exemple de composition d'un matériau selon l'invention sans l'utilisation d'un agent de couplage.

Le tableau 4 illustre la composition Comp1 d'un article réalisé en matériau plastique lourd selon l'état de la technique, notamment selon le document EP3674816.

Le tableau 5 illustre une première variante Comp2 de la composition Comp1 de l'état de la technique sans l'utilisation de fibre de renfort.

Le tableau 6 illustre une deuxième variante Comp 3 de la composition Comp1 de l'état de la technique dont les proportions de charge, de polymère et d'agent de couplage sont similaires aux exemples selon l'invention Inv1, Inv2. Une telle variante permet de mettre en avant les avantages et les améliorations de cohésion de matière obtenus par rapport au matériau décrit dans le document EP3674816.

Le tableau 7 est un tableau récapitulatif regroupant les différentes propriétés de rigidité, d'allongement à la rupture et de contrainte à la rupture des compositions selon l'invention (Inv1, Inv2, Inv3) et des compositions de l'état de la technique (Comp1, Comp2, Comp3).

En comparant les exemples 1 (Inv1), 2 (Inv2) et 3 (inv3) avec les exemples 4 (Comp1), 5 (Comp2), 6 (Comp3) de l'état de la technique, on montre l'intérêt du choix spécifique du polymère permettant d'améliorer la cohésion avec la charge, notamment grâce à la formation de liaisons hydrogènes avec la charge.

L'utilisation d'un bon agent de couplage permet d'améliorer encore davantage les propriétés de l'article (Exemple 3 et Exemple 1).

**Tableau 1 - Exemple 1 - Inv 1**

| | Nom | Fournisseur | % massique |
|---|---|---|---|
| Charge | Poudre Métal Carpenter 3120 | MIM W08 ETA | 72 |
| | Surface spécifique : 0,024 m2/g | | |
| Polymère | Polyamide PA11 Rilsan Clear G820 | Arkema (France) | 27 |
| Agent de couplage | Polyurethane Elastollan 1170 | BASF (Allemagne) | 1 |

**Tableau 2 - Exemple 2 - Inv 2**

| | Nom | Fournisseur | % massique |
|---|---|---|---|
| Charge | Poudre Oxyde de Zirconium (5% alumine) | Comadur | 71 |
| | Surface spécifique : 9,5 m2/g | | |
| Polymère | Polyamide PA11 Rilsan Clear G820 | Arkema (France) | 28 |
| Agent de couplage | Polyurethane Elastollan 1170 | BASF (Allemagne) | 1 |

**Tableau 3 - Exemple 3 - Inv 3**

| | Nom | Fournisseur | % massique |
|---|---|---|---|
| Charge | Poudre Métal Carpenter 3120 | MIM W08 ETA | 72 |
| | Surface spécifique : 0,024 m2/g | | |
| Polymère | Polyamide PA11 Rilsan Clear G820 | Arkema (France) | 28 |
| Agent de couplage | | | |

**Tableau 4 - Exemple 4 - Composition 1 (Comp1)**

| | Nom | Fournisseur | % massique |
|---|---|---|---|
| Charge | Poudre Métal Carpenter 3120 | MIM W08 ETA | 72 |
| | Surface spécifique : 0,024 m2/g | | |
| Polymère | MABS Terlux 2802 | Ineos Styrolution | 18,5 |
| Agent de couplage | Coathylene RP 9065-34 | Axalta | 3,5 |
| Fibres de renfort | Fibres de verre 200µm de long | Suter-Kunstoffe AG | 6 |

**Tableau 5 - Exemple 5 - Composition 2 (Comp2) (composition 1 sans fibre de renfort)**

| | Nom | Fournisseur | % massique |
|---|---|---|---|
| Charge | Poudre Métal Carpenter 3120 | MIM W08 ETA | 72 |
| | Surface spécifique : 0,024 m2/g | | |
| Polymère | MABS Terlux 2802 | Ineos Styrolution | 24,5 |
| Agent de couplage | Coathylene RP 9065-34 | Axalta | 3,5 |

**Tableau 6 - Exemple 6 - Composition 3 (Comp3)**

| | Nom | Fournisseur | % massique |
|---|---|---|---|
| Charge | Poudre Métal Carpenter 3120 | MIM W08 ETA | 72 |
| | Surface spécifique : 0,024 m2/g | | |
| Polymère | MABS Terlux 2802 | Ineos Styrolution | 27 |
| Agent de couplage | Coathylene RP 9065-34 | Axalta | 1 |

**Tableau 7- Comparatif des exemples 1, 2, 3, 4, 5 et 6 - Propriétés avant et après vieillissement entre ()**

| | Rigidité - module Young | Allongement Rupture | Contrainte Rupture |
|---|---|---|---|
| Exemple 1 (Inv 1) | 3,0 GPa *(3,1 GPa)* | 16,3% *(15,4%)* | 55 MPa (55 *MPa)* |
| Exemple 2 (Inv 2) | 4,4 GPa *(4,4 GPa)* | 9,7% (8,8%) | 63 MPa (61 *MPa)* |
| Exemple 3 (Inv 3) | 3,4 GPa | 14,8% | 58 MPa |
| Exemple 4 (Comp 1) | 2,9 GPa | 8,4% | 23 MPa |
| Exemple 5 (Comp 2) | 4,4 GPa | 1,8% | 32 MPa |
| Exemple 6 (Comp 3) | 3,0 GPa | 13,8% | 23 MPa |

## Revendications

1. Article réalisé dans un matériau ayant une masse volumique comprise entre 2 et 7 g/cm³, le matériau comprenant en poids pour un total de 100% :
- une charge (2) dans une matière métallique et/ou céramique ayant une masse volumique supérieure ou égale à 3 g/cm³, ladite charge (2) étant présente dans un pourcentage supérieur ou égal à 50% et inférieur ou égal à 85%,
- au moins un polymère (4) présent dans un pourcentage supérieur ou égal à 15% et inférieur ou égal à 50%,
- optionnellement au moins un agent de couplage (3) présent dans un pourcentage supérieur ou égal à 0% et inférieur à 10%,
- optionnellement au moins un renfort présent dans un pourcentage compris entre 0 et 10%,
- optionnellement au moins un pigment présent dans un pourcentage compris entre 0 et 5%,
- optionnellement au moins un diluant et/ou un plastifiant présent dans un pourcentage compris entre 0 et 5%,
ledit polymère (4) étant lié à la charge (2) et/ou, lorsque le matériau comporte au moins un agent de couplage (3), l'agent de couplage (3) étant respectivement lié au polymère (4) et à la charge (2) par une ou plusieurs liaisons hydrogènes ;
**caractérisé en ce que** le polymère (4), et/ou l'agent de couplage (3), comporte un donneur de liaison hydrogène qui est un groupement NHₓ adjacent à un accepteur de liaison hydrogène qui est un groupement C=O ; de manière à former un motif -[(C=O)NH]- ;
**caractérisé en ce que** le motif -[(C=O)NH]- représente au moins 1% molaire du polymère (4), et/ou de l'agent de couplage (3).

2. Article selon la revendication 1, **caractérisé en ce que** la charge (2) est présente dans un pourcentage en poids compris entre 60 et 80% et **en ce que** le polymère (4) est présent dans un pourcentage compris entre 20 et 40%.

3. Article selon la revendication 1 ou 2, **caractérisé en ce que** la charge (2) est présente dans un pourcentage en poids compris entre 65 et 75% et **en ce que** le polymère (4) est présent dans un pourcentage compris entre 25 et 35%.

4. Article selon la revendication 1, **caractérisé en ce que** la charge (2) est présente dans un pourcentage en poids compris entre 50 et 75% et **en ce que** le polymère (4) est présent dans un pourcentage compris entre 25 et 50%.

5. Article selon la revendication 1, **caractérisé en ce que** la charge (2) est présente dans un pourcentage en poids compris entre 50 et 65% et **en ce que** le polymère (4) est présent dans un pourcentage compris entre 35 et 50%.

6. Article selon l'une des revendications précédentes, **caractérisé en ce que** l'agent de couplage (3) est présent dans un pourcentage en poids compris entre 0,1 et 10%.

7. Article selon la revendication précédente, **caractérisé en ce que** l'agent de couplage (3) est présent dans un pourcentage en poids compris entre 0,1 et 5%.

8. Article selon la revendication 6 ou 7, **caractérisé en ce que** l'agent de couplage (3) est présent dans un pourcentage en poids compris entre 0,5 et 3%.

9. Article selon l'une des revendications précédentes, **caractérisé en ce que** la matière métallique et/ou céramique comprend en surface des oxydes, des hydroxydes et/ou des lacunes électroniques impliqués dans des liaisons hydrogènes, de coordination et ionique avec le polymère (4) et/ou l'agent de couplage (3).

10. Article selon l'une des revendications précédentes, **caractérisé en ce que** le polymère (4) et/ou l'agent de couplage (3) sont porteurs d'un ou plusieurs des groupements choisis parmi NHₓ, OH, COC, C=O et COOH.

11. Article selon l'une des revendications précédentes, **caractérisé en ce que** le polymère (4) est un polyamide, préférentiellement un polyamide 11.

12. Article selon la revendication 11, **caractérisé en ce que** l'agent de couplage (3) est un polyuréthane.

13. Article selon l'une des revendications précédentes, **caractérisé en ce que** ledit polymère (4) est lié à la charge (2) et/ou, lorsque le matériau comporte au moins un agent de couplage (3), l'agent de couplage (3) étant respectivement lié au polymère (4) et à la charge (2) par une ou plusieurs liaisons ioniques, le polymère (4) portant un groupement NHₓ+ lié à un anion de la charge (2) et/ou de l'agent de couplage (3).

14. Article selon la revendication précédente, **caractérisé en ce que** la charge (2) porte un anion O-.

15. Article selon la revendication 13 ou 14, **caractérisé en ce que** l'agent de couplage (3) porte un anion R-COO-.

16. Article selon l'une des revendications précédentes, **caractérisé en ce que** ledit polymère (4) est lié à la charge (2) et/ou, lorsque le matériau comporte au moins un agent de couplage (3), l'agent de couplage (3) étant respectivement lié au polymère (4) et à la charge (2) par une ou plusieurs liaisons de coordination, avec le polymère (4) et/ou l'agent de couplage (3) portant des fonctions amine ou acide carboxylique formant ladite liaison de coordination avec une lacune électronique en surface de la charge (2).

17. Article selon l'une des revendications 6 à 16, **caractérisé en ce que** l'agent de couplage (3) comporte au minimum 20 atomes de carbone.

18. Article selon l'une des revendications précédentes, **caractérisé en ce que** ledit matériau comporte la charge (2) et le polymère (4) qui est un polyuréthane, sans addition dudit agent de couplage (3).

19. Article selon l'une des revendications 6 à 17, **caractérisé en ce que** ledit matériau comporte la charge (2) avec comme polymère (4) du polyamide et comme agent de couplage (3) du polyuréthane.

20. Article selon la revendication précédente, **caractérisé en ce que** ledit matériau comporte, pour un pourcentage de 100%, ladite charge (2) dans un pourcentage compris entre 65 et 80%, ledit polymère (4) dans un pourcentage compris entre 19,5 et 34,5%, et ledit agent de couplage (3) dans un pourcentage compris entre 0,5 et 5%.

21. Article selon la revendication précédente, **caractérisé en ce que** ledit matériau comporte, pour un pourcentage de 100%, ladite charge (2) dans un pourcentage compris entre 65 et 75%, ledit polymère (4) dans un pourcentage compris entre 24 et 34%, et ledit agent de couplage (3) dans un pourcentage compris entre 1 et 3,5%.

22. Article selon la revendication 19, **caractérisé en ce que** ledit matériau comporte, pour un pourcentage de 100%, ladite charge (2) dans un pourcentage compris entre 50 et 75%, ledit polymère (4) dans un pourcentage compris entre 24,5 et 49,5%, et ledit agent de couplage (3) dans un pourcentage compris entre 0,5 et 5%.

23. Article selon la revendication précédente, **caractérisé en ce que** ledit matériau comporte, pour un pourcentage de 100%, ladite charge (2) dans un pourcentage compris entre 50 et 65%, ledit polymère (4) dans un pourcentage compris entre 34,5 et 49,5%, et ledit agent de couplage (3) dans un pourcentage compris entre 0,5 et 5%.

24. Article selon l'une des revendications 6 à 23, **caractérisé en ce que** ledit matériau comporte la charge (2) avec comme polymère (4) du polyamide et comme agent de couplage (3) un hydroxysilane avec une fonction amide ou aminé.

25. Article selon l'une des revendications 6 à 23, **caractérisé en ce que** ledit matériau comporte la charge (2) avec comme polymère (4) du polyesther et comme agent de couplage (3) un hydroxysilane avec une fonction amide ou amine.

26. Article selon l'une des revendications précédentes, **caractérisé en ce que** le renfort est présent dans un pourcentage en poids compris entre 1 et 6%.

27. Article selon l'une des revendications précédentes, **caractérisé en ce que** ledit renfort est formé de fibres de verre, de billes de verre, de fibres de carbone et/ou de fibres d'aramide.

28. Article selon l'une des revendications précédentes, **caractérisé en ce qu'**il s'agit d'un composant d'habillage ou du mouvement en horlogerie.

29. Procédé de fabrication d'un article selon l'une des revendications précédentes, comprenant :
a) une étape de mise à disposition des matières de base pour la charge (2), le polymère (4), et optionnellement l'agent de couplage (3), le renfort et le pigment, avec :
- la charge (2) dans une matière métallique et/ou céramique ayant une masse volumique supérieure ou égale à 3 g/cm³, ladite charge (2) étant présente dans un pourcentage supérieur ou égal à 50% et inférieur ou égal à 85%,
- le polymère (4) présent dans un pourcentage supérieur ou égal à 15% et inférieur ou égal à 50%,
- l'agent de couplage (3) présent dans un pourcentage supérieur ou égal à 0% et inférieur à 10%,
- le renfort présent dans un pourcentage compris entre 0 et 10%,
- le pigment présent dans un pourcentage compris entre 0 et 5%,
- le diluant et/ou le plastifiant présent dans un pourcentage compris entre 0 et 5%,
b) une étape de façonnage des matières de base pour réaliser l'article par une technique de moulage par injection ou par une technique d'impression 3D,
le procédé étant **caractérisé en ce que** la matière de base pour la charge (2) est une poudre ayant une surface spécifique BET supérieure ou égale à 0.01 m²/g, de préférence à 2 m²/g, plus préférentiellement à 5 m²/g et **en ce que**, après l'étape de façonnage, ledit polymère (4) est lié à la charge (2) et/ou, lorsque le matériau comporte au moins un agent de couplage (3), l'agent de couplage (3) est respectivement lié au polymère (4) et à la charge (2) par une ou plusieurs liaisons hydrogènes.
**caractérisé en ce que** le polymère (4), et/ou l'agent de couplage (3), comporte un donneur de liaison hydrogène qui est un groupement NHₓ adjacent à un accepteur de liaison hydrogène qui est un groupement C=O ; de manière à former un motif (C=O)NH;
**caractérisé en ce que** le motif (C=O)NH représente au moins 1% molaire du polymère (4), et/ou de l'agent de couplage (3).
